# EUROPEAN PATENT APPLICATION

(11) **EP 1 209 199 A1**
(43) Date of publication of application: **29.05.2002**
(21) Application number: 00204162.2
(22) Date of filing: 23.11.2000
(51) Int. Cl.: C08L 61/28, C08K 7/14

(54) **Granite-look reinforced laminar product of a thermosetting aminoplast**

(71) Applicant: DSM N.V., 6411 TE Heerlen (NL); PERSTORP AB, 284 80 Perstorp (SE)
(72) Inventor: Baetsen, Jacobus, 5928 NC Venlo (NL); Snuverink ook Lansink, Hermanus Peter, 6141 AN Limbricht (NL); Donkers, Renatus Petrus Mario, 6336 AA Hulsberg (NL)
(74) Representative: Jacobs, Monique S.N.

(57) **Abstract**

The invention relates to granite-look reinforced laminar products comprising fibrous material, grinded coloured (semi)cured aminoplast resin based granules and a thermosetting aminoplast resin mixture as matrix, the laminar product having a loss on cure of less than 10 wt.%,
and in which laminar product, placed between two removable carrier sheets, a compound is contained consisting of
(a) 1 to 25 wt.% of grinded coloured (semi)cured aminoplast resin based granules (having certain density and being 3D distributed in the matrix);
(b) 20 to 90 wt.% of a filler containing aminoplast resin mixture; and
(c) 5 to 35 wt.% of, at least for 60% chopped, fibrous material (2D-randomly distributed in the compound between two layers of said resin mixture matrix),
all percentages indicating the solid material contents of the starting materials, and the total of the percentages in (a), (b) and (c) adding up to 100 wt.%.

The invention also relates to a sheet moulding compound (SMC) production process for manufacturing such products and to moulded parts prepared therefrom.

## Description

The invention relates to a granite-look reinforced laminar product comprising fibrous material, grinded coloured (semi)cured aminoplast resin based granules and a thermosetting aminoplast resin mixture as matrix brought together between supporting sheets. The invention also relates to a sheet moulding compound (SMC) production process for manufacturing such product and to moulded parts prepared therefrom. As used herein the term aminoplast comprises the condensation products of amino compounds and an aldehyde. The amino compounds in aminoplasts are usually selected from the groups of ureum and its derivatives, and of triazines and derivatives thereof, e.g. triamino-S-triazine (also known as melamine). The melamine-aldehyde (i.e. melamine-formaldehyde) condensation product is hereinafter also referred to as MF. Also combinations of ureum and melamine aldehyde condensation products can be used. These can be referred to as MUF. As used herein the term (semi)cured includes fully cured and partially cured aminoplast resin based granules with a rest enthalpy ≤ 60%, preferably ≤ 40% of the rest enthalpy of uncured aminoplast resin based granules. Fully cured aminoplast resin based granules have a rest enthalpy ≤ 20% of the rest enthalpy of uncured aminoplast resin based granules. For instance for MF, the rest enthalpy of uncured aminoplast resin based granules is about 50 J/gr (as measured with differential scanning calorimetrie, DSC).

Granite-look reinforced laminar products are disclosed in JP-A-07,016,850. In JP-A-07,016,850 an artificial stone-like decorative panel is described which is made of (i) a decorative layer comprising a thermosetting resin mixture, in particular a MF resin or an unsaturated polyester resin or a combination of these two, a granular colouring agent, in particular broken kernels of a coloured thermosetting resin mixture with a particle diameter size of 300 µm to 5 mm, and a filler, and (ii) a base layer which is laminated to the decorative layer, comprising a thermosetting resin impregnated glass-fibre chopped-strand mat. It is also possible that the glass-fibre mat is put on the decorative layer and that the thermosetting resin impregnates the glass-fibre mat. The production of artificial stone-like decorative panels from such laminar products takes place in a mould of which the inner walls have been pre-treated with a mould release agent (e.g. wax, silicone resin or aqueous PVA solution). In said process the laminar product is put in the mould and vibrated for 1 minute so that the base layer is laminated on the decorative layer. The granite-look laminar product is then first hardened for 2 hours at a temperature of 30°C then removed from the mould and post-cured for 2 hours in a furnace at 100°C. This process requires long curing times and is rather complex as it also requires vibrating means to disperse the granular colouring agent in the resin matrix and overcome settling of the granules. Further this known process leads to a 2-layered product wherein the base layer is reinforced with glass fibres and the decorative layer contains granular colouring agent. So only the decorative layer has a granite-look appearance. Another disadvantage is that only the glass-fibre reinforced side has sufficient strength. Further the process of JP-A-07,016,850 is not suitable for production of artificial granite-look products with a perfectly flat surface, because the lamination of two layers consisting of different materials easily results in cured products with a warped surface. Warping of a surface is the phenomenon that the surface of a cured product is not totally flat, but is buckled or distorted.

The first object of the present invention, therefore, is to overcome the still existing need for providing granite-look reinforced laminar products which do not exhibit the abovementioned problems and which can easily be moulded to products with sufficient strength and granite-look appearance throughout the final product. Another object of the present invention is to provide a granite-look reinforced laminar product with homogenously 3D distributed coloured granules in the resin mixture as matrix. Another object of the present invention is to provide a granite-look reinforced laminar product that has no warped surface upon curing. Another object of the present invention is to provide an improved, cost-efficient and quicker process for producing granite-look laminar products comprising a thermosetting aminoplast resin mixture as matrix, grinded coloured (semi)cured aminoplast resin based granules and fibrous material which does not have the abovementioned disadvantages.

Surprisingly, this is being achieved when the granite-look reinforced laminar product comprising fibrous material, grinded coloured (semi)cured aminoplast resin based granules and a thermosetting aminoplast resin mixture as matrix comprises
a removable first carrier sheet and a removable second carrier sheet, between which two sheets a compound consisting of
(a) 1 to 25 wt.% of grinded coloured (semi)cured aminoplast resin based granules and
(b) 20 to 90 wt.% of an aminoplast resin mixture, 20 to 90 wt.% of the resin mixture consisting of filler and/or other additive materials and
(c) 5 to 35 wt.% of fibrous material
(all percentages indicating the solid material contents of the starting materials, and the total of the percentages in (a), (b) and (c) adding up to 100 wt.%) is contained,
wherein the density of the granules (a) is between 1 gr/cm³ and 2.5 gr/cm³, the granules being homogeneously 3D distributed in the resin mixture as matrix
and
wherein at least 60 wt.% of the fibrous material (c) consists of chopped fibres having an average length in the range of from 10 to 100 mm, the chopped fibres being substantially 2D-randomly distributed in the compound between two layers of said resin mixture matrix with homogeneously 3D distributed granules ((a)+(b)) and
wherein the loss on cure of the granite-look laminar product is less than 10 wt.% of the total weight of the granite-look laminar product.

The thermosetting aminoplast resin and the grinded coloured (semi)cured aminoplast resin based granules in the granite-look laminar product according to the invention can, in principle, be any aminoplast resin (as is obtained by condensation of an amino compound and an aldehyde), particularly any aminoplastic (form)aldehyde resin. Examples of such resins are those which contain ureum or melamine as amino compound; also MUF combinations may be used. A melamine-aldehyde is used, because of its superior mechanical, surface and flame-resistant properties. The capability of pigmentation is also improved further. The advantages of the products according to the invention are manifested, in particular, if the thermosetting resin is an MF resin.

The aminoplast resin can be manufactured in a manner known to the person skilled in the art by reacting an amino compound and formaldehyde in water. The ratio of, for example, formaldehyde and melamine is, normally speaking, between 1.0 and 2.5, preferably between 1.1 and 2.0. It is also possible to add plasticizers such as, for example, sorbitol, ε-caprolactam, ethylene glycol, trioxitol, toluenesulphonamide and products from the family of guanamines (benzo-, aceto- and diguanamines).

In the granite-look laminar products according to this invention the loss on cure is less than 10 wt.% of the total weight of the granite-look laminar product. This percentage of loss on cure can easily be achieved by drying the laminar product in its production process before any of the first and/or second carrier sheets have been removed.

The loss on cure as used in this application, is determined by percentage of weight loss (e.g. free moisture, water and/or other volatiles) when the granite-look laminar product is dried in a ventilation oven at 160°C for 0.5 hours.

Because, the granite-look laminar products according to the invention are suitable for being dried between the carrier sheets to lower the loss-on-cure value, direct processing in closed moulds is possible afterwards, upon removal of any of the carrier sheets, without problems of foaming, blistering and porosities in the final product.

20 to 90 wt.% of the aminoplast resin mixture present in the granite-look laminar product consists of filler and/or other additive materials. This resin mixture may contain all kinds of fillers. Said fillers can be the same as the conventional fillers for granite-look laminar products based on, for example, unsaturated polyester resins. For example, lime, calcium carbonate, clay, carbon particles, silica, aluminium trihydrate, quartz and/or metal particles can be used as fillers. Preferably, the resin mixture contains aluminium trihydrate and/or calcium carbonate as filler. Moreover, the granite-look laminar product may also contain catalysts, mould release agents, pigments, dispersion agents and other conventional additives. Conventional catalysts, such as, for example, p-toluenesulphonic acid and boric acid, can be used as catalysts.

The grinded coloured (semi)cured aminoplast resin based granules can be manufactured in a manner known to the person skilled in the art by crushing coloured (semi)cured aminoplast resin plates or (reinforced)SMC's. Different fractions of grinded coloured (semi)cured aminoplast resin based granules, obtainable by sieving, and characterised by different diameter ranges of the granules, can be used in the production of the granite-look laminar products. All pigments which are compatible with the aminoplast resin can be used for colouring the (semi)cured aminoplast resin based granules. Separately produced charges of (differently coloured; at least two colours) granules may be mixed.

In the granite-look laminar products according to this invention the density of the granules can be chosen between 1 gr/cm³ and 2.5 gr/cm³. This extremely broad suitable range is advantageous and it is impossible that such broad range is used in any of the hitherto known laminar products. Suitable granules in the lower density range 1-1.5 gr/cm³ can be obtained e.g. by using low density fillers, by using hollow balls or foaming; suitable granules in the higher density range 2.0-2.5 gr/cm³ can be obtained by using high density fillers in the coloured (semi)cured aminoplast resin based granules.

The granules are being homogeneously 3D distributed in the resin mixture as matrix. As used herein, homogeneously 3D means that the granules are distributed throughout the whole resin matrix. In practice this can be easily achieved by mixing the granules directly in the resin mixture by using a mixer. The coloured (semi)cured aminoplast resin based granules preferably have a good compatibility with the thermosetting aminoplast resin mixture. In such case granite-look laminar products are produced which, upon curing, result in plates having a nice granite-look appearance and a very smooth surface which does not exhibit warping and is not susceptible for staining. Warping is the phenomenon that plates tend to distort from their flat surface. Staining is a phenomenon that various liquids, when left or spoilt at a surface, leave flecks or spots penetrating into such surface.

Within the context of this application, the fibrous material may be inorganic fibres (natural and/or synthetic), e.g. mineral fibres, but also organic fibres (natural and/or synthetic) may be used as part of the fibrous material.

In principle, all commercially available fibres can be used as fibrous material. Suitable fibres are, for example, carbon fibres, glass fibres, rock fibres, cotton-wool fibres, fibres based on highly oriented thermoplastics, such as aramids and UHMWPE (ultra-high molecular weight polyethylene) fibres, polyamide fibres and cellulose fibres. Particularly suitable fibres are glass fibres.

According to the invention at least 60 wt.% of the fibrous material consists of chopped fibres having an average length in the range of from 10 to 100 mm. The chopped fibres being substantially 2D-randomly distributed in the compound between two layers of said resin matrix with homogeneously 3D distributed granules ((a)+(b)). As used herein, substantially 2D-randomly distributed means that the chopped fibres are more or less evenly, in random orientations, distributed in a plane which can be considered to be about parallel to the planes of the first and second removable carrier sheets (or the upper and lower planes of the granite-look laminar product after removal of those sheets). In practice this can be easily achieved by distributing the chopped fibres directly from a chopping unit onto a first layer of resin mixture matrix and granules supported on the first carrier sheet and applying on top thereof a second layer of resin mixture matrix and granules supported by the second carrier sheet, thereby making a sandwich which may be even better homogenized by passing the granite-look laminar product through a series of rollers so that the fibrous material is thoroughly impregnated and the granules are homogeneous distributed, as in standard SMC processes.

Preferably the aminoplast resin mixture and/or the granules in the laminar products according to the invention are composed of a melamine-aldehyde resin.

Preferably, the granite-look laminar product according to the invention has a loss on cure in the range of 0.5 to 10 wt.% of the total weight of the granite-look laminar product, preferably in the range of from 1.0 to 8 wt.% and most preferably in the range of from 2.0 to 4.0 wt.%. In the most preferred range the moulded end products obtained have a completely homogeneous appearance and are porosity-free, thereby being insusceptible for staining. If the granite-look laminar product has a loss on cure of less than 0.5 wt.%, flow moulding thereof is not feasible.

The lowering of the percentage loss on cure can be obtained by drying the granite-look laminar product without removal of any of the carrier sheets. The drying may be performed most conveniently if a proper choice of carrier sheets is made. The removable first and/or second carrier sheets in the laminar products according to the invention therefore preferably have a permeability for water vapour at 23°C of 10 g/m²•day or more, preferably 25 g/m²•day or more as determined according to DIN 53122. This permeability for water vapour is especially important during the production process for the granite-look laminar products. The skilled man will be readily able to find which carrier sheets are suitable for being applied according to the invention. Many types of suitable carrier sheets are commercially available and their properties, e.g. as to permeability for water vapour can be readily determined or are available from the pertaining product information or supplier's information.

The two carrier sheets (films) on the granite-look laminar products will prevent contamination of the granite-look laminar product during production, handling and transport. This will enable the granite-look laminar products to be applied in such market segments where the outer appearance of the final products is critical.

In the granite-look laminar products according to the invention, preferably at least two fractions of the granules, with each different diameter ranges, are being used to get a product with a deeper and more complex pattern. In the granite-look laminar products according to the invention, preferably a mixture of granules with at least two different colours is being used.

The chopped fibrous material in the granite-look laminar product according to the invention preferably consists of chopped glass fibres having an average length in the range of from 12 to 60 mm. It can, however, be advantageous that part of the fibrous material used in the granite-look laminar products according to the invention consists of continuous fibres (rovings). Such continuous fibres, particularly when they are present in the granite-look laminar product unidirectionally and in appropriate amounts, may provide to the product additionally improved mechanical properties in specific directions.

Most preferably, the fibrous material in the granite-look laminar product according to the invention consists of glass fibres and contains less than 1 wt.% of sizing and binder material as determined by the loss-on-ignition test. In such case granite-look laminar products with best homogeneity and outer appearance are being obtained.

If the glass fibres contain more than 1 wt.% of sizing and binder material as determined by the loss-on-ignition test, then more fibrous material remains visible at the surface.

The granite-look laminar products according to the invention have a loss on cure of less than 10 wt.% and can be used in closed mould techniques. They also can be used for the production of homogeneous, relatively thick materials, whereas the granite-look laminar products according to the prior art are only suitable for production of relatively thin materials or ― in case of production of thicker materials ― are only being used as a top-layer attached to a backing.

The invention also relates to a novel (SMC-)process for manufacturing granite-look reinforced laminar products comprising fibrous material, grinded coloured (semi)cured aminoplast resin based granules and a thermosetting aminoplast resin mixture as matrix. This new process comprises the steps of
i) mixing grinded coloured (semi)cured aminoplast resin based granules (a) having a density of between 1 gr/cm³ and 2.5 gr/cm³ in an aminoplast resin mixture (b) as a matrix of which resin mixture 20 to 90 wt.% consists of filler and/or other additive materials and which resin mixture has a viscosity in the range of from 5 to 250 Pa•s, preferably of from 20 to 100 Pa•s, to get a mixture of (a) and (b) wherein (a) is being homogeneously 3D distributed in (b);
ii) applying a part of the mixture of (a) and (b) to a removable first carrier sheet and applying another part of the mixture to a second removable carrier sheet thereby obtaining two layers of supported mixture to be used as a lower layer and an upper layer between which
iii) fibrous material (c) of which at least 60 wt.% of the fibrous material consists of chopped fibres having an average length in the range of from 10 to 100 mm is being substantially 2D-randomly distributed and impregnated in the resin mixture matrix,
   thereby obtaining a sheet moulding compound wherein the weight percentages of granules (a) vs. resin mixture (b) vs. fibrous material (c) are respectively 1 to 25 wt.% vs. 20 to 90 wt.% vs. 5-35 wt.%
   (all percentages indicating the solid material contents of the starting materials, and the total of the percentages in (a), (b) and (c) adding up to 100 wt.%)
iv) and drying said sheet moulding compound, without removal of any of the carrier sheets, to a loss on cure of less than 10 wt.%.

As mentioned above, the thermosetting aminoplast resin and the grinded coloured (semi)cured aminoplast resin based granules used in the process according to the invention can, in principle, be any aminoplast resin (as is obtained by condensation of an amino compound and an aldehyde), particularly any aminoplastic (form)aldehyde resin. The skilled man will be aware that the aminoplast resin mixture and/or granules can also be prepared from solid aminoplast materials, for instance from spray-dried resin, by adding ― at an elevated temperature, e.g. preferably in the range of 50 ― 60°C - an adequate amount of water (usually up to about 25 to 75 wt.% of water as compared to the solid material content) in order to obtain a resin of suitable viscosity.

Most suitable methods for preparing a resin mixture to be used in the process according to this invention however, start from liquid resins, but in such case the water content of the resin mixture is relatively high, even up to 30 wt.%. It is possible to lower the water content by adding some amount of dry resin to such liquid resin so that, before the drying to obtain the granite-look laminar product, a loss on cure as low as even about 15 wt.% can be reached. At such levels of loss on cure the viscosity of the resin mixture is still acceptable. If necessary, a small amount of additives, e.g. Versa TL, may be supplied to adjust the resin mixture viscosity.

The aminoplast resin mixture preferably is filtered before or after the addition of the grinded coloured (semi)cured aminoplast resin based granules to remove undesirable sedimentations from the resin mixture. When the grinded coloured (semi)cured aminoplast resin based granules are added to the resin mixture before filtering, the filter should have a larger mesh size, so that the granules can pass the filter and the sedimentation stay on the filter. It may be advantageous to add a viscosity adjuster (e.g. Versa TL) to improve the filterability.

It is important to note that the viscosity of the resin mixture used in this process should be chosen between 5 and 250 Pa•s, preferably even between 20 and 100 Pa•s. This viscosity is considerably higher than the viscosity of that of resin mixtures used in the impregnation of non-woven mats in techniques of the prior art, for instance as described in EP-A-845,346. Advantageously as a result of these relatively high viscosities of the resin mixtures the granules are being dispersed better and more homogeneously 3D in the resin mixture. This leads to less sedimentation of the granules in the granite-look laminar products. Also the surface of the final cured moulded products is not susceptible for staining.

Preferably the aminoplast resin mixture and/or the granules used in the process according to the invention are composed of a melamine-aldehyde resin.

Drying of the sheet moulding compound in the last step of the process of the invention, without removal of any of the carrier sheets, to a loss on cure of less than 10 wt.% is easy. The granite-look laminar products so obtained can be processed by closed mould techniques, but also other techniques may be used.

In the process according to the invention, the sheet moulding compound is preferably dried to a loss on cure in the range of from 0.5 to 10 wt.% of the total weight of the granite-look laminar product, preferably in the range of from 1.0 to 8 wt.% and most preferably in the range of from 2.0 to 4.0 wt.%.

It is preferred that the granite-look laminar product, before being dried, is pre-cut according to desired dimensions, for instance, equal to the inlay pattern for the mould used. The pre-cutting before drying prevents the occurrence of bare glass fibres at the cutting edges.

A loss on cure of less than 10 wt.%, particularly in the ranges as mentioned above, has been found to give good results. Too high loss-on-cure values may result in pores, blisters, whitening (colour fading) and other defects in the final product upon curing, which also adversely affects the mechanical properties.

The drying can easily be achieved, for instance, in an oven through which the sheet moulding compound is transported, without removing the carrier sheets. Also drying off-line, at relatively low temperature, for instance at ambient temperature or even up to about 100°C, in drying chambers is possible. The latter embodiments of drying may be performed while storing the SMC's until the loss on cure has reached a desired value. Because the drying process is rather quick, especially when spacers are being used between the separate SMC's, for instance, by separating the SMC's by individual layers of corrugated cardboard or otherwise, low loss-on-cure values are being reached already within a few days at 60°C. Drying in an oven, of course, is quicker. The drying may also be assisted by vacuum.

Part of the drying also can be achieved by the presence, in the aminoplast resin mixture matrix, of desiccants or of products like gypsum and/or cement. Such additives have a function different from that of conventional thickening agents, which are mainly being used for influencing the viscosity of the sheet moulding compounds. This way of (internal) drying, however, does not lead to a weight decrease of the granite-look laminar product, but merely to lowering the content of free moisture in the compound.

In the process according to the invention, preferably at least two fractions of the granules, with each different diameter ranges, are being used, to get a product with a deeper and more complex pattern.

In the process according to the invention, preferably mixtures of granules with at least two different colours are being used.

It is preferred that the chopped fibrous material, as used in the process according to the invention, consists of glass roving having an average length in the range of from 12 to 60 mm. In particular, the chopped fibrous material preferably has strand tex numbers in the range of from 18 to 300 tex, especially preferred in the range of from 35 to 100 tex.

In a preferred embodiment of the invention also continuous fibres are being distributed and impregnated in the resin mixture matrix with the granules, together with and in the same plane as the chopped fibres. The content of chopped fibrous material in the granite-look laminar product according to the invention may be controlled by the chopper speed.

It is most advantageous in the process according to the invention that the fibrous material used consists of glass fibres and contains less than 1 wt.% of sizing and binder material, as determined by a loss-on-ignition test. In such case granite-look laminar products with best homogeneity and outer appearance are being obtained.

The removable first and/or second carrier sheets preferably have a permeability for water vapor at 23°C of 10 g/m²•day or more, preferably 25 g/m²•day or more, as determined according to DIN 53122.

Apart from solving the problems of the prior art as mentioned in the introduction, the process according to the invention has the following advantages:
- the process can be performed more consistently, i.e. the properties of the products obtained show less variations over subsequent production runs;
- overall yields of the process are higher because of less start-up losses, less contamination of the products and equipment (in particular of the drying oven), less fouling of impregnating parts of the equipment, etc.
- the production process to form the wet granite-look laminar products (impregnation step) is very rapid as compared with the production rate of prior art routes. Granite-look laminar products can be produced at a speed of up to 10 m/min and even higher.

The granite-look laminar products made according to the invention can conveniently be used, upon removal of the first and second carrier sheets, in closed mould processes, e.g. for flow moulding. In such processes, the inlay pattern usually will be equal to the dimensions of the moulding part (100% inlay). However, using the laminar parts obtained according to the invention, also less than 100% inlay is possible. The pressure used in such flow moulding processes is usually between 1 and 20 MPa (between about 10 and 200 bar), preferably between 5 and 10 MPa (between about 50 and 100 bar). The usual moulding temperature, which also ensures the curing of the thermosetting resin, is between 50 and 200°C, preferably between 140 and 170°C.

The present invention therefore also relates to use of the granite-look laminar products according to the invention or obtained through a process according to the invention, upon removal of the first and second carrier sheets, in a closed mould production process.

Finally, the invention also relates to moulded products obtained in a closed mould process with the aid of a granite-look laminar product according to the invention or obtained through a process according to the invention. The granite-look laminar products according to the invention products obtained have better isotropic properties than the products of the state of the art and, as a result, there are no problems of warping, susceptibility for staining etc. which often occur in moulded products produced differently.

It is an additional advantage of the granite-look laminar products according to the invention that mechanical properties are obtained which are in the same range as for products of the prior art, but at a lower content of fibrous material in the product.

The granite-look laminar products can be used particularly satisfactorily in the manufacture of moulded parts, for example bodywork components for lorries and cars. Particularly suitable applications are wallpanels in trains and public transport (including aircraft), wall claddings for indoor or outdoor use, as well as kitchen and sanitary appliances, such as oven doors, worktops, trays and the like. The particularly good fire-resistant properties, heat resistance, high-temperature dimensional stability, scratch resistance, stain resistance and granite-look appearance are of great advantage.

The invention will now be explained by reference to the following example without being limited thereto.

### Example

### A. Preparation of wet MF resin

5 parts of caprolactam, 24 parts of water and 135 parts of formalin (30% formaldehyde in water having a pH of 9.4) were added to 100 parts of melamine. The condensation reaction was carried out at 95°C until the dilution capability (water tolerance) at 20°C of the resin was 1.2 kg of resin per kg of water. The formaldehyde/melamine ratio was 1.7. The viscosity of the resin is about 1800 mPa•s. The solid content of the resin matrix is about 66.8 wt.%

### B. Preparation of the grinded granules

Coloured (semi)cured MF resin plates (optionally being reinforced) are grinded and sieved to get different fractions of granules of different diameter ranges. The particle size of the grinded granules is, for instance, in the range of from 100 to 1000 µm. Mixtures of differently coloured granules, for instance, black coloured granules/white coloured granules in a ratio of 1:3 (wt./wt.) were made, as well as mixtures of granules of different diameter ranges.

### C. Preparation of resin mixture 1 (resin matrix + granules)

A 1:1 (wt./wt.) mixture of the above prepared wet MF resin and spray dried MF-resin (Madurit from Vianova Resins Germany) is filtered over a filter with 1mm diameter sieve opening to obtain a resin mixture matrix (solid content about 83.4 wt.%). In a blade mixer, 23.1 wt.% of aluminium trihydrate Martinal 906 (filler), 5.5 wt.% of grinded coloured (semi)cured aminoplast resin based granules, 0.12 wt.% of an aqueous p-toluenesulphonic acid solution (50 wt.% solids; catalyst), 0.35 wt.% of magnesium stearate Harochem MF2 (release agent), 0.21 wt.% Versa TL (viscosity adjuster) and a mixture of TiO₂, red pigment (bayferrox Red 130M from Makati) or black pigment (bayferrox 318M from Makati) (colours additives) were added to 55.6 wt.% of the above filtered MF-resin mixture matrix. Stirring was carried out until a homogeneous mixture was obtained. The viscosity was adjusted by adding water to 55 Pa•s (Brookfield at 30°C).

### D. Preparation of resin mixture 2 (resin matrix + granules)

A 3:1 (wt./wt.) mixture of the above prepared wet MF resin and spray dried MF-resin (Madurit from Vianova Resins Germany) is filtered over a filter with 1mm diameter sieve opening to obtain a resin mixture matrix (solid content about 74.5 wt.%). In a blade mixer, 47.8 wt.% of aluminium trihydrate Martinal 906 (filler), 5.1 wt.% of grinded coloured (semi)cured aminoplast resin based granules, 0.07 wt.% of an aqueous p-toluenesulphonic acid solution (50 wt.% solids; catalyst), 0.21 wt.% of magnesium stearate Harochem MF2 (release agent), 0.21 wt.% Versa TL (viscosity adjuster) and a mixture of TiO₂, red pigment (bayferrox Red 130M from Makati) or black pigment (bayferrox 318M from Makati) (colours additives) were added to 33.9 wt.% of the above filtered MF-resin mixture matrix. Stirring was carried out until a homogeneous mixture was obtained. The viscosity was adjusted by adding water to 55 Pa•s (Brookfield at 30°C).

### E. Preparation of laminar products

The resin mixture 1 or 2 was transferred to two doctor boxes of a standard SMC line. The resin mixture was added on two carrier sheets (upper and lower, respectively). As carrier sheets a polyamide film (Rodethul mono Yellow, from Eurozak, Diest, Belgium) were used. Chopped fibrous material is put on the lower carrier sheet in an amount of 1/5 wt./wt. of the compound (solid content). The upper and lower carrier sheets with the resin mixture and fibrous material were brought together as a sandwich. Impregnation of the fibrous material occurred in the compaction zone. The granite-look laminar product so obtained was dried, without removal of any of the carrier sheets, in either of two ways:
(i) Drying in tunnel oven (such as is commonly being used for drying melamine impregnated laminates): temperature 140°C; residence time about 6 minutes. The loss on cure of the granite-look laminar products obtained was 8 wt.% for resin mixture 1 and 4 wt.% for resin mixture 2;
(ii) Low temperature drying in a pile of laminar product sheets (at a temperature in the range of 20 to 80°C; corrugated cardboard sheets positioned between the sheets). Low temperature drying, of course, takes more time than in (i). Drying of the material to the required loss on cure of 8 wt.% (for resin mixture 1) or 4 wt.% (for resin mixture 2) took respectively about 200 hours at 30°C; about 100 hours at 45°C and about 50 hours at 60°C.
The consistency of the granite-look laminar products obtained in both ways of drying was judged as being excellent. The surface weight turned out to be 3300 ± 50 g/m² for resin mixture 1 and 3100 ± 50 g/m² for resin mixture 2.

### F. Production of moulded parts

To evaluate the visual appearance of moulded products, flat plates from the dried laminar products as prepared above were pre-cut to the dimensions of the moulding tool to ensure 100% inlay. Each time four layers of the laminar product, after removal of the upper and lower carrier sheets thereof, were positioned one on top of the other in the moulding tool. The carrier sheets could be removed from the granite-look laminar products without any problem. Moulding was done at 160 °C and 8 Mpa.

The moulded products made from resin mixture 1 (highest MF-resin content) or resin mixture 2 (lowest MF-resin content) all have excellent surface properties, do not exhibit warping, and are not susceptible for staining; they have an excellent granite-look appearance, the ones from resin mixture 1 being best. Moulded products made from resin mixture 1 can be very suitably used in e.g. sanitary appliances. Products made from resin mixture 2 can be used in a broader range of applications.

## Claims

1. Granite-look reinforced laminar product comprising fibrous material, grinded coloured (semi)cured aminoplast resin based granules and a thermosetting aminoplast resin mixture as matrix,
**characterized in that**
the granite-look reinforced laminar product comprises a removable first carrier sheet and a removable second carrier sheet between which two sheets a compound consisting of
(a) 1 to 25 wt.% of grinded coloured (semi)cured aminoplast resin based granules and
(b) 20 to 90 wt.% of an aminoplast resin mixture, 20 to 90 wt.% of the resin mixture consisting of filler and/or other additive materials
(c) 5 to 35 wt.% of fibrous material
(all percentages indicating the solid material contents of the starting materials, and the total of the percentages in (a), (b) and (c) adding up to 100 wt.%)
is contained,
wherein the density of the granules (a) is between 1 gr/cm³ and 2.5 gr/cm³, the granules being homogeneously 3D distributed in the resin mixture as matrix
and
wherein at least 60 wt.% of the fibrous (c) material consists of chopped fibres having an average length in the range of from 10 to 100 mm, the chopped fibres being substantially 2D-randomly distributed in the compound between two layers of said resin mixture matrix with homogeneously 3D-distributed granules ((a)+(b))
and
wherein the loss on cure of the granite-look laminar product is less than 10 wt.% of the total weight of the granite-look laminar product

2. Granite-look laminar product according to Claim 1, **characterized in that** the aminoplast resin mixture and the grinded coloured (semi)cured aminoplast resin based granules are composed of a melamine-aldehyde resin.

3. Granite-look laminar product according to any one of Claims 1 or 2,
**characterized in that** the loss on cure of the granite-look laminar product is in the range of from 0.5 to 10 wt.% of the total weight of the granite-look laminar product, preferably in the range of from 1.0 to 8 wt.% and most preferably in the range of from 2.0 to 4.0 wt.%.

4. Granite-look laminar product according to any one of Claims 1 - 3
**characterized in that** the grinded coloured (semi)cured aminoplast resin based granules consist of at least two fractions of the granules, with each different diameter ranges.

5. Granite-look laminar product according to any of Claims 1 - 4,
**characterized in that** the grinded coloured (semi)cured aminoplast resin based granules consist of a mixture of granules with at least two different colours.

6. Granite-look laminar product according to any one of Claims 1 - 5
**characterized in that** the chopped fibrous material consist of chopped glass fibres having an average length in the range of from 12 to 60 mm.

7. Granite-look laminar product according to any one of Claims 1 - 6,
**characterized in that** part of the fibrous material consist of continous fibres.

8. Process for manufacturing a reinforced granite-look laminar product comprising fibrous material, grinded coloured (semi)cured aminoplast resin based granules and a thermosetting aminoplast resin mixture as matrix,
**characterized in that** the process comprising the following steps
i) mixing grinded coloured (semi)cured aminoplast resin based granules (a) having a density of between 1 gr/cm³ and 2.5 gr/cm³ in an aminoplast resin mixture (b) as a matrix of which resin mixture 20 to 90 wt.% consists of filler and/or other additive materials and which resin mixture has a viscosity in the range of from 5 to 250 Pa•s, preferably of from 20 to 100 Pa•s,
to get a mixture of (a) and (b) wherein (a) is being homogeneously 3D distributed in (b);
ii) applying a part of the mixture of (a) and (b) to a removable first carrier sheet and applying another part of the mixture to a second removable carrier sheet thereby obtaining two layers of supported mixture to be used as a lower layer and an upper layer between which
iii) fibrous material (c) of which at least 60 wt.% of the fibrous material consists of chopped fibres having an average length in the range of from 10 to 100 mm is being substantially 2D-randomly distributed and impregnated in the resin mixture matrix,
thereby obtaining a sheet moulding compound wherein the weight percentages of granules (a) vs. resin mixture (b) vs. fibrous material (c) are respectively 1 to 25 wt.% vs. 20 to 90 wt.% vs. 5-35 wt.%
(all percentages indicating the solid material contents of the starting materials, and the total of the percentages in (a), (b) and (c) adding up to 100 wt.%)
iv) arid drying said sheet moulding compound, without removal of any of the carrier sheets, to a loss on cure of less than 10 wt.%.

9. Process according to Claim 8, **characterized in that** the aminoplast resin mixture and the grinded coloured (semi)cured aminoplast resin based granules are composed of a melamine-aldehyde resin.

10. Process according to any one of Claims 8 or 9, **characterized in that** the sheet moulding compound is dried to a loss on cure of the granite-look laminar product is in the range of from 0.5 to 10 wt.% of the total weight of the granite-look laminar product, preferably in the range of from 1.0 to 8 wt.%and most preferably in the range of from 2.0 to 4.0 wt.%.

11. Process according to any one of Claims 8 - 10, **characterized in that** the sheet moulding compound is pre-cut to dimensions as desired before being dried.

12. Process according to any one of Claims 8 - 11 **characterized in that** the grinded coloured (semi)cured aminoplast resin based granules consist of at least two fractions of granules, with each different diameter ranges.

13. Process according to any one of Claims 8 - 12 **characterized in that** the grinded coloured (semi)cured aminoplast resin based granules consist of a mixture of granules with at least two different colours.

14. Process according to any one of Claims 8 - 13, **characterized in that** the chopped fibrous material consists of chopped glass fibres having an average length in the range of from 12 to 60 mm.

15. Process according to any one of Claims 8 - 14, **characterized in that** also continuous fibres are distributed and impregnated in the resin mixture.

16. Use of a granite-look laminar product according to any one of claims 1 ― 7 or obtained through a process of any one of claims 8 ― 15, upon removal of the first and second carrier sheets, in a closed mould production process.

17. Moulded product obtained in a closed mould process according to claim 16 with the aid of a granite-look laminar product according to any one of Claims 1 ― 7 or obtained through a process of any one of claims 8 - 15.
